Europäisches Patentamt

European Patent Office

Office européen des brevets

(19)

(11) Publication number: **0 048 087**
**B1**

# EUROPEAN PATENT SPECIFICATION

(12)

(45) Date of publication of patent specification: **18.07.84**

(51) Int. Cl.³: **B 60 T 11/20, F 15 B 7/08**

(21) Application number: **81303664.7**

(22) Date of filing: **12.08.81**

(54) **Hydraulic master cylinder.**

(30) Priority: **13.09.80 GB 8029670**

(43) Date of publication of application:
**24.03.82 Bulletin 82/12**

(45) Publication of the grant of the patent:
**18.07.84 Bulletin 84/29**

(84) Designated Contracting States:
**BE DE FR GB IT SE**

(56) References cited:
**US - A - 3 374 628**
**US - A - 3 707 845**

(73) Proprietor: **AUTOMOTIVE PRODUCTS PUBLIC
LIMITED COMPANY**
**Tachbrook Road**
**Leamington Spa Warwickshire CV31 3ER (GB)**

(72) Inventor: **Temperley, Harry Davison**
**1 Avon Road Whitnash**
**Leamington Spa Warwickshire (GB)**
Inventor: **Joynes, Brian**
**14 Crossfield Road**
**Warwick Warwickshire (GB)**

Courier Press, Leamington Spa, England.

## Description

This invention relates to hydraulic master cylinders particularly but not exclusively for motor vehicle braking systems.

Hitherto, hydraulic master cylinders have usually been mounted on the engine side of the vehicle bulkhead. Modern vehicle design is tending toward compact motor vehicles having more efficient use of under bonnet space. Conversely the requirement for dual line braking systems has resulted in longer bulkier hydraulic master cylinders. The effect of these developments has been to make the conversion of righthand drive vehicles to left-hand drive, or vice-versa, extremely difficult due to lack of space for the master cylinder on the other hand side of the vehicle.

It has been proposed to move the pedal box to the other hand side of the vehicle whilst leaving the master cylinder at its original site but this solution entails connecting linkages which can increase the resilience and lost-motion in the braking system.

A hydraulic master cylinder according to the first part of claim 1 is known from US—A—3,374,628. The hydraulic master cylinder is attached to the driving compartment side of a vehicle bulkhead. The master cylinder includes a rotary actuator which is connected to a brake pedal to displace a single piston along an axis common with the pivot axis of the brake pedal.

It is also known from US—A—3,707,845 to provide a dual hydraulic master cylinder assembly for a split braking system in which two pistons are displaceable in opposite directions on a common axis. However, the pistons are displaced by equal amounts and there is no inherent compensation for any different volume requirements in the two parts of a dual line braking system where the two pistons operate in fluid displacing chambers which are each connected to one or another set of brake actuators.

It is an object of the present invention to provide a dual hydraulic master cylinder having pistons displaceable along an axis common with the pivot axis of a brake pedal and which can inherently compensate for any different volume requirements in a dual line braking system.

According to the invention there is provided a hydraulic master cylinder comprising a lever, a piston for displacement of fluid from a chamber and expander means responsive to angular movement of the lever to move the piston axially along the pivot axis of the lever, characterised in that two pistons for two separate chambers are displaceable in opposite directions in response to angular movement of a common lever and that the lever can float axially in order to equalise the load exerted on each piston.

Preferably an expander means is provided for each piston. Such expander means may comprise rolling elements interposed between complementary arcuate tracks on the piston and lever, in which case a boss may be provided on each side of the lever and each piston may include an annular collar which partially encompasses the boss.

Where each chamber is connected to a hydraulic reservoir through a respective closure valve means, each closure valve means may be directly operable by the lever to close the connection between the hydraulic reservoir and the chamber.

Other features of the invention are included in the following description of a preferred embodiment shown, by way of example only, on the accompanying drawings in which:—

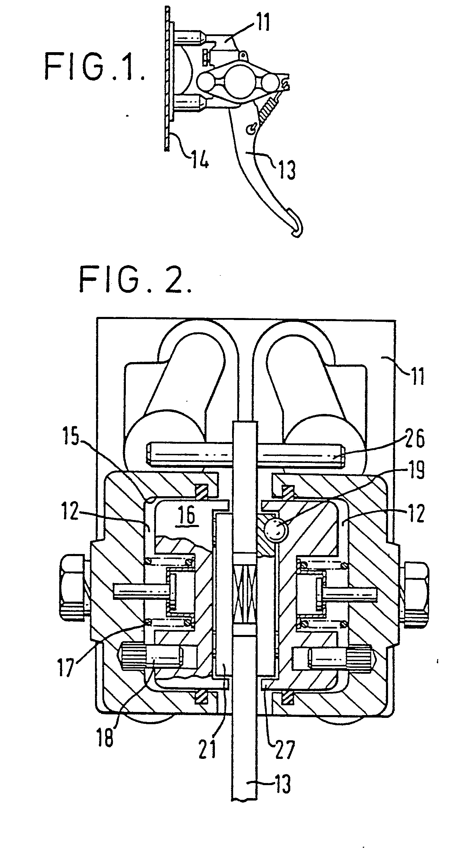

Fig. 1 is a pictorial representation of a master cylinder installation according to the invention;

Fig. 2 is a transverse section through the operating chambers of the master cylinder as shown in Fig. 1; and

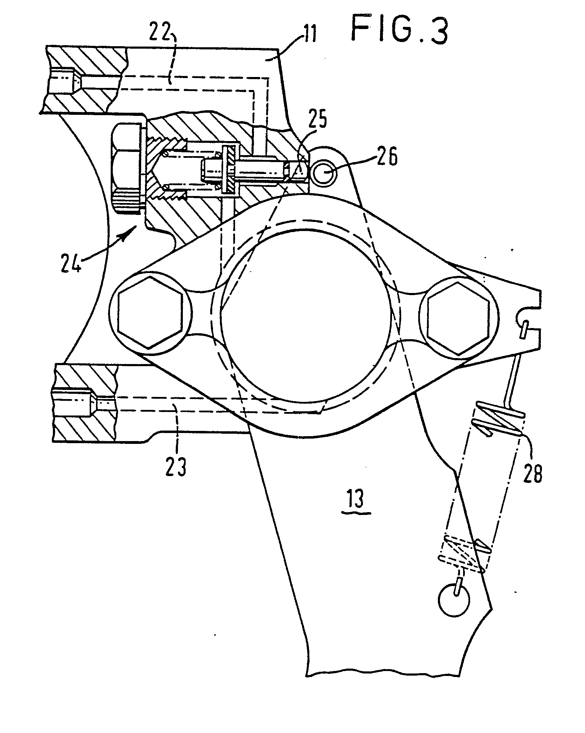

Fig. 3 is a part-sectional end view of the master cylinder of Fig. 1 and Fig. 2.

The invention will be described as applied to a hydraulic master cylinder for a vehicle hydraulic braking system.

With reference to the figures there is shown a master cylinder body 11 having a pair of hydraulic actuation chambers 12 between which a brake pedal lever 13 is supported for pivotal movement. The body 11 is attached to the vehicle bulkhead 14 inside the vehicle passenger compartment. Each actuating chamber 12 comprises a cylindrical bore 15 open towards the brake pedal 13 and housing a piston 16 slidable therein. Each piston is resiliently urged out of its bore by a return spring 17, and a peg 18 between each piston and the corresponding bore wall prevents relative rotation therebetween.

A series of balls 19 are located between each piston 16 and the pedal 13 in a respective arcuate track formed partly in the piston and partly in a boss 21 of the pedal.

Each track is symmetrical but increases in depth along the track length such that relative rotation between the pedal and the pistons will urge each piston into its bore against the effect of the spring 17.

Each chamber 12 is connected through an inlet passage 22 to a fluid reservoir (not shown) and through an outlet passage 23 to the wheel brake actuators (not shown) of a vehicle hydraulic braking system.

A closure valve 24 is provided in the inlet passage 22 to close communication between the fluid reservoir and the respective actuating chamber 12. The valve 24 includes a protruding rod member 25 engagable by a cross-shaft 26 of the pedal 13 to open the valve 24 when the pedal is in the returned position.

The pedal 13 must float axially of the chambers 12 in order to equalize the load exerted on each piston 16. To prevent inadvertent withdrawal of the pedal transversely to the chamber axis each piston includes an annular collar 27 which partially encompasses the respective pedal boss 21.

Operation of the master cylinder is as follows:—

On initial depression of the pedal 13 the closure valve seals the chamber 24 from the fluid reservoir. Further depression of the peal urges the pistons into their respective bores and the consequent increasing fluid pressure in the outlet passage 23 actuates the vehicle wheel brakes.

On release, the pedal returns under the action of the usual spring 28 to open the closure valves 24 and vent the chambers 12 to the fluid reservoir. The pistons 16 return under the action of their springs 17 so maintaining the balls 19 in their respective tracks.

In a dual line braking system the respective outlet passages 23 are connected each to one group of wheel brake actuators.

The rate of increase of depth of the ball tracks may be constant or may vary should a variable ratio master cylinder be required. For instance, a rapid rate of increase at the start of brake pedal travel would actuate the wheel brakes sufficiently to overcome the pull-off springs and provide a "quick start" to initial braking of the vehicle.

Although the master cylinder has been described with reference to pistons reciprocal in cooperating bores, it will be realised that other fluid displacing means, such as diaphragms or bladders are applicable to the invention. This construction can also provide a pivot for a clutch pedal thus eliminating the usual mounting bracket.

## Claims

1. A hydraulic master cylinder comprising a lever (13), a piston (16) for displacement of fluid from a chamber (12) and expander means responsive to angular movement of the lever (13) to move the piston (16) axially along the pivot axis of the lever (13), characterised in that two pistons (16) for two separate chambers (12) are displaceable in opposite directions in response to angular movement of a common lever (13) and that the lever (13) can float axially in order to equalise the load exerted on each piston (16).

2. A hydraulic master cylinder as claimed in Claim 1, characterised in that an expander means is provided for each piston (16).

3. A hydraulic master cylinder as claimed in Claim 2, in which the expander means comprises rolling elements (10) interposed between complementary arcuate tracks on the piston (16) and the lever (13) characterised in that a boss (21) is provided on each side of the lever (13) and each piston (16) includes an annular collar (27) which partially encompasses the boss (21).

4. A hydraulic master cylinder as claimed in any preceding claim in which each chamber (12) is connected to a hydraulic reservoir through a respective closure valve means (24), characterised in that each closure valve means (24) is directly operable by the lever (13) to close the connection between the hydraulic reservoir and the chamber (12).

5. A hydraulic master cylinder as claimed in Claim 4, characterised in that the closure valve means (24) includes a protruding rod member (25) engageable by a cross shaft (26) of the lever (13).

## Patentansprüche

1. Ein hydraulischer Steuerzylinder umfassend einen Hebl (13), einen Kolben (16) zur Verschiebung von Fluid aus einer Kammer (12) und Spreizmittel, die auf eine Winkelbewegung des Hebels (13) ansprechen, um den Kolben (16) axial entlang der Drehachse des Hebels (13) zu bewegen, gekennzeichnet dadurch, daß zwei Kolben (16) für zwei getrennte Kammern (12) in entgegengesetzte Richtungen ansprechend auf eine Winkelbewegung eines gemeinsamen Hebels (13) verschiebbar sind und daß sich der Hebel (13) axial bewegen kann, um die auf jeden Kolben (16) ausgeübte Kraft auszugleichen.

2. Ein hydraulischer Steuerzylinder gemäß Anspruch 1, gekennzeichnet dadurch, daß ein Spreizmittel für jeden Kolben (16) vorgesehen ist.

3. Ein hydraulischer Steuerzylinder gemäß Anspruch 2, in welchem die Spreizmittel Wälzelemente (19) umfassen, die zwischen komlementären bogenförmigen Bahnen an dem Kolben (16) und dem Hebel (13) angeordnet sind, gekennzeichnet dadurch, daß ein runder Vorsprung (21) an jeder Seite des Hebels (13) vorgesehen ist und jeder Kolben (16) einen ringförmigen Bund (27) beinhaltet, der den runden Vorsprung (21) teilweise umfaßt.

4. Ein hydraulischer Steuerzylinder gemäß irgendeinem vorhergehenden Anspruch, in welchem jede Kammer (12) mit einem Hydraulikbehälter über eine jeweilige Schließventileinrichtung (24) verbunden ist, gekennzeichnet dadurch, daß jede Schließventileinrichtung (24) direkt durch den Hebel (13) betätigbar ist, um die Verbindung zwischen dem Hydraulikbehälter und der Kammer (12) zu schließen.

5. Ein hydraulischer Steuerzylinder gemäß Anspruch 4 gekennzeichnet dadurch, daß die Schließventileinrichtung (24) ein vorstehendes Stabteil (25) beinhaltet, an dem eine Querwelle (26) des Hebels (13) angreifbar ist.

## Revendications

1. Maître-cylindre hydraulique comprenant un levier (13), un piston (16) pour provoquer le déplacement d'un fluide hors d'une chambre (12), et un moyen écarteur fonctionnant en réponse au mouvement angulaire du levier (13) pour déplacer le piston (16) axialement suivant l'axe de pivotement du levier (13), caractérisé en ce que deux pistons (16) pour deux chambres séparées (12) peuvent être déplacés dans des directions opposées en réponse au mouvement angulaire d'un levier commun (13) et en ce que le levier (13) peut flotter axialement afin d'égaliser la charge exercée sur chaque piston (16).

2. Maître-cylindre hydraulique selon la revendication 1, caractérisé en ce qu'un moyen écarteur est prévu pour chaque piston (16).

3. Maître-cylindre hydraulique selon la revendication 2, dans lequel le moyen écarteur comprend des éléments roulants (19) interposés entre des chemins de roulement arqués complémentaires formés sur le piston (16) et sur le levier (13), caractérisé en ce qu'un bossage (21) est formé sur chaque côté du levier (13), et chaque piston (16) comporte un collier annulaire (27) qui entoure partiellement le bossage (21).

4. Maître-cylindre hydraulique selon l'une quelconque des revendications précédentes dans lequel chaque chambre (12) est reliée à un réservoir hydraulique par l'intermédiaire d'un dispositif à soupape d'obturation respectif (24), caractérisé en ce que chaque dispositif (24) à soupape d'obturation est actionnable directement par le levier (13) pour fermer le raccordement entre le réservoir hydraulique et la chambre (12).

5. Maître-cylindre hydraulique selon la revendication 4, caractérisé en ce que le dispositif (24) à soupape d'obturation comporte une tige saillante contre laquelle une barre transversale (16) du levier (13) peut venir en appui.

FIG.1.

FIG. 2.

0 048 087

FIG.3